(19) Europäisches Patentamt
European Patent Office
Office européen des brevets

(11) Veröffentlichungsnummer: **0 141 142**
**B1**

(12) # EUROPÄISCHE PATENTSCHRIFT

(45) Veröffentlichungstag der Patentschrift: **28.11.90**

(51) Int. Cl.$^5$: **C 25 B 11/00**, H 01 M 4/86

(21) Anmeldenummer: **84110443.3**

(22) Anmeldetag: **03.09.84**

(54) **Gasdiffusionselektrode mit hydrophiler Deckschicht und Verfahren zu ihrer Herstellung.**

(30) Priorität: **09.09.83 DE 3332566**

(43) Veröffentlichungstag der Anmeldung:
**15.05.85 Patentblatt 85/20**

(45) Bekanntmachung des Hinweises auf die Patenterteilung:
**28.11.90 Patentblatt 90/48**

(84) Benannte Vertragsstaaten:
**AT BE CH DE FR GB IT LI NL SE**

(56) Entgegenhaltungen:
**EP-A-0 097 770**
**EP-A-0 106 621**
**FR-A-2 259 446**
**GB-A-1 147 742**
**US-A-4 377 496**

**Römmps Chemie-Lexikon, 7. Auflage, Seite 2374**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT**
**Postfach 80 03 20**
**D-6230 Frankfurt am Main 80 (DE)**

(72) Erfinder: **Staab, Rudolf, Dr.**
**Am Flachsland 56**
**D-6233 Kelkheim (Taunus) (DE)**
Erfinder: **Russow, Jürgen, Dr.**
**Am Schieferberg 45**
**D-6233 Kelkheim (Taununs) (DE)**

**EP 0 141 142 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die vorliegende Erfindung betrifft eine Gasdiffusionskathode für die Sauerstoffreduktion enthaltend eine hydrophobe Elektrokatalysatorschicht, die auf einer Seite mit einer hydrophilen Deckschicht versehen ist, sowie ein Verfahren zu ihrer Herstellung.

Die wäßrige Natriumchlorid-Elektrolyse ist ein wichtiges Verfahren zur Herstellung der Schwerchemikalien Chlor und Natronlauge. Eine moderne Variante wird in einer Membranzelle durchgeführt. Bei diesem Verfahren besteht die Elektrolyse-Zelle aus einem Anodenraum mit einer Anode und einem Kathodenraum mit einer Kathode, sowie einer Kationenaustauscher-Membran, die beide Elektrolyseräume trennt. Wenn man in den Anodenraum eine gesättigte Natriumchlorid-Lösung einspeist, so werden unter der Einwirkung des elektrischen Stroms die Chloridionen an der Anode zu elementarem Chlor entladen. Gleichzeitig findet an der Kathode eine Zerlegung von Wasser unter Bildung von elementarem Wasserstoff und Hydroxidionen statt. Etwa in gleichem Maße wie Hydroxidionen erzeugt werden, wandern Natriumionen aus dem Anodenraum durch die Membran in den Kathodenraum. Die zugrundeliegende chemische Reaktion entspricht der folgenden Gleichung:

$$2NaCl+2H_2O \rightarrow 2\ NaOH+Cl_2+H_2.$$

Der entstehende Wasserstoff stellt ein unerwünschtes Nebenprodukt dar. Das Potential für die Wasserstoffabscheidung gemäß der Gleichung

$$2H_2O+2e^- \rightarrow H_2+2OH^-$$

beträgt −0,83 V bezogen auf die Standardwasserstoff-Elektrode. Durch die Polarisation der Kathode mit Sauerstoff läßt sich am negativen Pol der Elektrolysezelle eine Reaktion erzwingen, die der folgenden Gleichung entspricht:

$$2H_2O+O_2+4e^- \rightarrow 4OH^-.$$

Das Potential dieser Reaktion beträgt+0,40 V bezogen auf die Standardwasserstoff-Elektrode. Durch die Polarisation, wie sie in Sauerstoffdiffusionskathoden stattfindet, können folglich bei der Chloralkali-Elektrolyse theoretisch 1,23 V an Zellspannung eingespart werden. Dies ist in Zeiten hoher Energiekosten von erheblicher wirtschaftlicher Bedeutung.

In der Figur ist schematisch eine elektrochemische Zelle zur Elektrolyse wäßriger Natriumchlorid-Lösungen dargestellt, die mit einer Gasdiffusionselektrode ausgerüstet ist. Die Zelle ist in einen Anodenraum (1), einen Kathodenraum (2) und einen Gasraum (3) unterteilt. Über eine Zuleitung (4) wird gesättigte Natriumchlorid-Sole in den Anodenraum (1) gepumpt. An der Anode (5) werden Chloridionen zu elementarem Chlor entladen. Vorzugsweise werden dimensionsstabile Anoden aus Titan eingesetzt, die mit einer Aktivierung ausgestattet sind, um die Chlorüberspannung gering zu halten. Über Leitung (6) verlassen das gebildete Chlor und die verarmte Sole den Anodenraum (1). Zwischen (1) und Kathodenraum (2) befindet sich eine Kationenaustauscher-Membran (7), durch die Natriumionen unter dem Einfluß des elektrischen Stromes in den Kathodenraum wandern.

Der Reaktionspartner Wasser wird über die Zuleitung (9) der Zelle in Form von entionisiertem Wasser oder verdünnter Natronlage zugeführt. Im Kathodenraum (2) wird Natronlauge gebildet, die die Zelle über die Öffnung (10) verläßt.

Kathodenraum (2) und Gasraum (3) werden durch die Gasdiffusionselektrode (8) voneinander getrennt, die als Kathode dient. In den Gasraum (3) wird über Rohr (11) ein Sauerstoff enthaltendes Gas (reiner Sauerstoff, $CO_2$-freie Luft oder mit Sauerstoff angereicherte und/oder befeuchtete Luft) eingeleitet. Das Gas dringt in die Diffusionselektrode ein, wobei Sauerstoff reduziert wird. Das restliche Gas verläßt schließlich, im allgemeinen an Sauerstoff verarmt, über die Leitung (12) die Zelle.

Die Elektrode (8) stellt einen porösen Körper dar, der den Zutritt der Reaktionspartner Wasser und Sauerstoff erlaubt. In der Hauptsache besteht sie aus einem elektrochemisch aktiven Material, das die Sauerstoffreduktion katalysiert. Häufig wird die Elektrode in gestützter Form gefertigt, d.h. ein netzförmiger, aus Metall bestehender Stromkollektor ist in die Elektrokatalysatorschicht eingearbeitet oder stützt sie von außen. Als Elektrokatalysator dienen poröse Metalle wie Platinschwarz, Silberschwarz oder Nickelschwarz, andere Stoffe, wie Phthalocyanine, Mischoxide vom Spinell- oder Perowskit-Typ und Aktivkohle, die mit einem für die Sauerstoffreduktion geeigneten Katalysator aktiviert sein kann.

Damit sich die Poren der Elektrode beim Betrieb nicht vollständig mit Elektrolyt füllen und somit die Sauerstoffzufuhr unterbunden wird, ist häufig in das elektrochemisch aktive Material ein hydrophobes Material, vorzugsweise Polytetrafluorethylen (PTFE), eingearbeitet. Man kann auch lediglich eine Außenseite mit einer hydrophoben Deckschicht aus nicht aktivierter Aktivkohle/PTFE überziehen (europäische Patentanmeldung 051 432). Hydrophobe Elektroden, die PTFE enthalten, sind beispielsweise in den US-Patentschriften 43 50 608, 43 39 325, 4 179 350, 3 977 901 und 3 537 906 beschrieben.

Die erforderliche Zellspannung einer solchen Zelle setzt sich zusammen aus den Elektrodenpotentialen, den Überspannungen an den beiden Elektroden, dem Membranwiderstand und

dem Spannungsabfall innerhalb des Elektrolyten. Die Überspannungen an den Elektroden sind durch Auswahl eines geeigneten elektrochemisch aktiven Elektrodenmaterials beeinflußbar. Der Membranwiderstand ist konstant und durch die Wahl der Kationenaustauschermembran gegeben. Der Elektrolytwiderstand kann vermindert werden, indem man die beiden elektroden möglichst nahe aneinander bringt. Da man die Zelle mit Wasser versorgen muß, kann der Abstand zwischen Kathode und Anode ein bestimmtes Maß nicht unterschreiten. In der Praxis wird man jedoch den Abstand zwischen Membran und Gasdiffusionselektrode möglichst gering halten. Bewährt haben sich Abstände zwischen 0,5 und 3 mm, insbesondere zwischen 0,5 und 1 mm. Dieser geringe Abstand kann beim Betreiben einer Zelle jedoch auch nachteilig sein. Wenn die Elektrode etwas Gas durchläßt, was beispielsweise bei gealterten Elektroden oder bei Elektroden mit kleinen mechanischen Verletzungen der Fall ist, so bilden sich auf der Katholytseite der Kathode (=Gasdiffusionselektrode) Gasblasen aus, die den Stofftransport erschweren und den elektrischen Widerstand erhöhen. Daher steigt die Zellspannung an. Wegen des kleinen Abstandes von Membran und Kathode besteht zusätzlich die Gefahr, daß die Gasblasen im Katholytspalt an der hydrophoben Membran und der hydrophoben Kathode haften bleiben, d.h. nicht von der erzeugten Lauge mitgerissen werden. Dies hat zur Folge, daß nicht nur der Widerstand im Elektrolyten größer wird, sondern auch Teile der Kathodenfläche für die Reaktion blockiert werden.

In EP—A—106 621 wird eine Gasdiffusionselektrode beschrieben, bei der die dem Elektrolyten zugewandte Seite eine hydrophile Schicht, wie z.B. Asbest, Aluminiumoxyd oder Silicagel, aufweist.

In FR—A—2259 446 wird eine Elektrode beschrieben, deren elektrokatalytisches Material Kohle ist und deren hydrophile Schicht aus Nickel bestehen kann.

Es bestand daher die Aufgabe, eine Sauerstoffdiffusions-Kathode zu schaffen, an der eventuell gebildete Gasblasen (Luft oder $O_2$) nicht haften sondern aus dem Katholytspalt ausgetragen werden.

Die vorliegende Erfindung löst dieses Problem durch Einsatz einer Gasdiffusionselektrode für die Sauerstoffreduktion enthaltend eine hydrophobe Elektrokatalysatorschicht in Form eines Gemisches aus metallischem Silber und hydrophobem Polymer und eine mit dieser verbundenen hydrophoben Schicht bestehend aus mindestens einem Übergangsmetall oder einem Oxid oder Mischoxid von Übergangsmetallen, welche in feinverteilter Form auf die hydrophile Schicht aufgebracht wurden. Diese Gasdiffusionelektrode ist dadurch gekennzeichnet, daß in der hydrophoben Elektrokatalysatorschicht ein Netz aus Metalldraht als Stromkollektor angeordnet ist.

Die erfindungsgemäße Elektrode hat vorzugsweise die Form einer ebenen Fläche. Sie eignet sich besonders gut für die Sauerstoff-Reduktion im alkalischen Milieu, also unter Bedingungen der wäßrigen Chloralkali-Elektrolyse. An der hydrophil beschichteten Seite wird das Anhaften von Gasblasen verhindert. Überraschenderweise besitzen solche beschichteten Elektroden eine höhere elektrochemische Aktivität und damit geringere Überspannung als unbeschichtete Elektroden.

Die Übergangsmetalle, die in Form der Metall oder Oxide der Beschichtung dienen, werden insbesondere ausgewählt aus der Gruppe bestehend aus Titan, Chrom, Mangan, Eisen, Kobalt, Nickel, Kupfer, Zink, Silber, Ruthenium, Rhodium, Palladium, Osmium, Iridium und Platin. Günstig ist eine Beschichtung mit den elektrokatalytisch wirksamen Metallen Silber und Platin, insbesondere aber mit Nickel. Zum Auftragen von Nickel mit besonders großer Oberfläche kann man so vorgehen, daß man zunächst mit einer Nickel-Aluminium-Legierung beschichtet und später durch Behandlung mit wäßriger Lauge den Aluminiumanteil der Legierung herauslöst. Dies kann sowohl vor dem Einbau der Elektrode in die Zelle als auch während des Einsatzes als Kathode bei der wäßrigen Alkalichlorid-Elektrolyse durch das entstehende Alkalihydroxid geschehen. Es können auch Legierungen verwendet werden, die mehrere Übergangsmetalle enthalten, sowie Gemische von Oxiden von Übergangsmetallen. Bei einer Beschichtung mit Oxiden sind Oxide aus der Gruppe Titanoxid, Mangan-IV-oxid, Zinkoxid und Silberoxid bevorzugt. Es ist ferner möglich, mehrere verschiedene Oxide nacheinander auf die hydrophobe Elektrokatalysatorschicht aufzubringen.

In der Figur ist die erfindungsgemäße Elektrode (8), schematisch im Querschnitt zu erkennen. Es ist zu sehen, daß die Stromzuführung durch einen netzförmigen Stromkollektor (13) erfolgt. Vorzugsweise handelt es sich dabei um ein Metalldrahtnetz aus Nickel oder versilbertem Nickel, das neben der Stromzuführung auch die Stromverteilung innerhalb der Katalysatorschicht (14) übernimmt. Auf (14) ist die hydrophile Deckschicht (15) aufgebracht. Sie verhindert das Haften von Gasblasen an der Elektrodenoberfläche und erleichtert die Versorgung der eigentlichen Reaktionszone mit Wasser und die Abführung gebildeter Hydroxylionen. Die Reaktion findet an der Dreiphasengrenze Wasser-Sauerstoff-Elektrokatalysator statt, die sich innerhalb von (14) ausbilden soll.

Es ist vorteilhaft, ein möglichst feinteiliges hydrophiles Beschichtungsmaterial einzusetzen, insbesondere Material der Teilchengröße unter 0,063 mm. Sehr feine Fraktionen lassen sich durch Mahlen, Zerhacken in einer Schlagkreuzmühle oder Mörsern, sowie nachfolgendes Absieben erhalten. Die Stärke der Beschichtung mit hydrophilem Material soll zwischen 1 und 200, insbesondere 2 und 50, vorzugsweise 2,5 und 20 mg/cm$^2$ betragen.

Zur Herstellung der erfindungsgemäßen Gasdiffusionselektrode erzeugt man zunächst aus einem pulverförmigen Gemisch, das metallisches Silber (als Elektrokatalysator) und ein hydrophobes Polymer enthält, eine hydrophobe Katalysatorschicht (meist in Form einer ebenen Fläche). Man verbindet die Elektrokatalysatorschicht mit einem netzförmigen Stromkollektor und bringt auf der Elektrolytseite der Elektrokatalysatorschicht in feinverteilter Form mindestens ein Übergangsmetall oder ein Oxid oder

Mischoxid von Übergangsmetallen auf und verbindet es durch Anwendung von Druck mit der hydrophoben Elektrokatalysatorschicht.

Zur Herstellung der elektrophilen Schicht kann man z.B. eine Suspension eines angegebenen hydrophilen Materials in Wasser oder in einem organischen Lösungsmittel (wie z.B. Alkohol, Methylenchlorid oder Petroläther) auf die hydrophobe Elektrokatalysatorschicht aufbringen und dort die flüssige Phase verdunsten lassen. Man kann ferner die angegebene Suspension filtrieren, wobei die hydrophobe Elektrokatalysatorschicht das Filter darstellt, oder man kann das hydrophile Material in Pulverform gleichmäßig auf der Elektrokatalysatorschicht auftragen, z.B. mittels eines Siebes. Durch anschließendes Pressen oder Rollen (Einwirkung von Druck) wird das Beschichtungsmaterial mit der Rohelektrode innig verbunden. Dabei ist die Anwendung von Hitze vorteilhaft, weil der hydrophobe Anteil der Elektrokatalysatorschicht zumindest bei hohen Temperaturen thermoplastisch wird.

Sehr gute Ergebnisse wurden erhalten, wenn die hydrophobe Elektrokatalysatorschicht in Form eines Gemisches aus metallischem Silber und hydrophobem Polymer durch reduktive Abscheidung von Silber auf den kleinen suspendierten Teilchen eines Kunststoff Latex gemäß DE—A—33 03 779 erzeugt wird. Dabei wird bei 0—50°C eine wäßrige Dispersion eines hydrophoben organischen Polymeren (insbesondere PTFE), eine Silbersalz-Lösung und ein Reduktionsmittel für Silberionen (z.B. Formaldehyd) vereint und dabei ein pH-Wert eingehalten, bei dem die eingesetzte Dispersion stabil ist und das Silbersalz reduziert wird. Für PTFE-Dispersionen eignen sich pH-Werte von 4 bis 11, insbesondere 9 bis 10. Bezogen auf die Menge der Einstazprodukte beträgt das Gewichtsverhältnis Silber/Trockenanteil der organischen Dispersion 20:80 bis 90:10.

Die Erfindung wird durch die folgenden Beispiele näher erläutert.

Beispiel 1:

Zu 4,7 g einer käuflichen 40 %igen wäßrigen Polytetrafluorethylen-Dispersion (Handelsname Hostaflon®TF 5033) gibt man 80 ml Wasser und 30 l einer 35 %igen Formaldehydlösung und kühlt diese Mischung auf 0 bis 10°C ab. Hierzu tropft man im Verlauf von etwa einer Stunde einmal eine Lösung von 16,7 g Silbernitrat in 130 ml Wasser, sowie 130 ml einer 10 %igen Kaliumhydroxid-Lösung. Während des Zutropfens wird das Reaktionsgemisch kräftig durchgemischt; die Reaktionstemperatur soll 15°C nicht überschreiten. Die Dosierung der Kalilauge soll so durchgeführt werden, daß der pH-Wert nicht über 10 ansteigt und nicht unter 7,5 absinkt. Nach Beendigung der Reaktion läßt man den gebildeten Niederschlag absitzen und dekantiert die überstehende Mutterlauge ab. Der zurückbleibende Feststoff wird zunächst mit 100 ml Wasser, dann mit 200 ml Petrolether gewaschen und der so erhaltene Elektrokatalysator bei 120°C getrocknet (Ausbeute 12,3 g, Silbergehalt etwa 85 Gew.-%).

2 g Elektrokatalysator werden in einer Schlagkreuzmühle (Hersteller: Janke und Kunkel, Staufen) bei 20.000/min. 10 sec. zerhackt und anschließend in 20 ml Isopropanol suspendiert. Die so erhaltene Suspension gießt man in ein Membranfilter mit einem Innendurchmesser von 4,2 cm und saugt das Lösungsmittel ab, bis ein noch feuchter Filterkuchen verbleibt. Diesen preßt man anschließend mit einem Druck von $19{,}6 \cdot 10^5$ Pa in ein versilbertes Nickelnetz der Maschenweite 0,25 mm und der Drahtstärke 0,16 mm. Nach dem Trocknen bei 110°C im Trockenschrank ist die Rohelektrode bereit zur Beschichtung. 170 mg gemörsertes Zinkoxid werden durch ein Metallnetz der Maschenweite 0,063 mm auf die Rohelektrode aufgesiebt. Durch einen Druck von $6 \cdot 10^6$ Pa wird dann das Zinkoxid mit einem Stempel in die Oberfläche der Elektrode eingepreßt und diese anschließend bei 250°C gesintert. Die so hergestellte Gasdiffusionselektrode hat eine Belegung an Zinkoxid von etwa 12 mg/cm$^2$. Die gemessenen Potentiale gegen eine gesättigte Kalomelektrode (GKE) dieser Elektrode sind in Tabelle 1 aufgeführt.

Beispiel 2:

Es wurde eine Elektrode analog Beispiel 1 hergestellt, außer daß anstatt Zinkoxid ein Mangandioxid verwendet wurde, dessen größte Teilchen ein Sieb der Maschenweite 0,06 mm passieren. Die Belegung der Elektrode betrug etwa 16 mg/cm$^2$ an $MnO_2$. Die gemessenen Potentiale vs GKE sind in Tabelle 1 dargestellt.

Beispiel 3:

Beispiel 1 wurde wiederholt, jedoch Silberoxid als Beschichtungsmaterial (24 mg/cm$^2$) verwendet. Die gemessenen Potentiale vs GKE finden sich in Tabelle 1.

Beispiel 4:

Es wurde eine Elektrode analog Beispiel 1 hergestellt, dabei jedoch Eisenpulver der Korngröße 0,06 mm als Beschichtungsmaterial verwendet. Die Belegung der Elektrode mit Eisen betrug etwa 28 mg/cm$^2$. Die gemessenen Potentiale vs. GKE sind in Tabelle 1 ausgeführt.

Beispiel 5:

Es wurde eine Elektrode analog Beispiel 1 hergestellt, außer daß Nickelpulver der Korngröße 0,06 mm als Beschichtungsmaterial verwendet wurde. Die Belegung der Elektrode mit Nickel betrug etwa 36 mg/cm$^2$. Die gemessenen Potentiale vs GKE sind in Tabelle 1 aufgeführt.

Beispiel 6:

Es wurde eine Elektrode analog Beispiel 1 hergestellte, außer daß anstatt Zinkoxid Silberpulver zur Beschichtung verwendet wurde. Die Belegung dieser Elektrode mit Silber betrug etwa 18 mg/$cm^2$. Die gemessenen Potentiale vs GKE sind in Tabelle 1 aufgeführt.

Beispiel 7:

Zu 9,4 g einer wäßrigen Polytetrafluorethylen-Dispersion (Handelsname Hostaflon® TF 5033-40%) gibt man 280 ml Wasser und 45 ml einer 35 %igen Formaldehyd-Lösung und kühlt die Mischung auf 0 bis 10°C ab. Hierzu tropft man im Verlauf von etwa 3,5 Stunden einmal eine Lösung von 30,3 g Silbernitrat und 3,2 g Quecksilber-(II)-nitrat in 450 ml Wasser, sowie 310 ml einer 10 %igen Kaliumhydroxyd-Lösung. Während des Zutropfens wird das Reaktionsgemisch kräftig durchgemischt; die Reaktionstemperatur soll 15°C nicht überschreiten. Die Dosierung der Kalilauge muß so durchgeführt werden, daß der pH-Wert nicht über 10 ansteigt; der pH-Wert sollte 7,5 nicht unterschreiten. Nach Beendigung der Reaktion läßt man den gebildeten Niederschlag absitzen, dekantiert die überstehende Mutterlauge ab und wäscht den zurückbleibenden Feststoff zunächst mit Wasser, dann mit Petrolether. Nach dem Trocknen bei 110°C beträgt die Ausbeute an Katalysatormaterial 24,8 g. Der Silbergehalt des so hergestellten Materials beträgt etwa 77 Gew.-%, der Quecksilbergehalt 8 Gew.-%.

1 g dieses Materials wurde mit 1 g gemahlenem Natriumchlorid in einer Schlagkreuzmühle innig vermischt und anschließend in 10 ml Isopropanol aufgeschlämmt. Die Suspension wurde in ein Membranfilter mit einem Innendurchmesser von 4,2 cm gegossen und das Isopropanol abgesaugt. Der noch feuchte Filterkuchen wurde mit einem Druck von $2 \cdot 10^6$ Pa in ein versilbertes Nickelnetz der Maschenweite 0,25 mm und der Drahtdicke 0,16 mm gepreßt. Nach einstündigem Trocknen bei 110°C wurde die Rohelektrode mit 170 mg einer Nickel-Aluminium-Legierung bestäubt, die zu je 50 Gew.-% aus den beiden Metallen bestand. Die Teilchengröße betrug weniger als 0,063 mm. Die bestäubte Elektrode wurde anschließend mit einem Druck von $6 \cdot 10^6$ Pa gepreßt und bei 250°C 15 Minuten gesintert. Die gesinterte Elektrode wurde 15 Stunde in eine 10 %ige Natronlauge gelegt, um das Aluminium und das als Porenbildner dienende Natriumchlorid herauszulösen. Nach dem Wässern in entionisiertem Wasser und dem Trocknen bei 110°C betrugt die Belegung der Elektrode etwa 65 mg/$cm^2$ an Katalysator und etwa 6 mg/$cm^2$ an Raney-Nickel-Beschichtung. Die gemessenen Potentiale gegen eine gesättigte Kalomelektrode sind in Tabelle 1 aufgeführt.

Eine analog gefertigte Elektrode mit einer aktiven Fläche von 40 $cm^2$ wurde über 20 Wochen in einer Elektrolysezelle betrieben, und dabei 8,25 molare Natronlauge produziert. Bei einer Temperatur von 80°C und einer Strombelastung von 3 kA/$m^2$ betrug die Zellspannung 2,14 V. Obwohl der Kathodenspalt nur 1 mm breit war, wurde kein Haften von Gasblasen zwischen der Elektrode und der Kationenaustauschermembran beobachtet.

Beispiel 8 (Vergleichsbeispiel)

Es wurde eine Elektrode analog Beispiel 1 jedoch ohne Beschichtung mit ZnO hergestellt. Die Potentiale vs GKE dieser Elektrode sind in Tabelle i aufgeführt. Gasblasen, die durch die Elektrode durchtreten, haften an der Elektrodenoberfläche und können oft nur durch Erschütterungen der Elektrolysezelle ausgetrieben werden. Es tritt der "Gasblaseneffekt" auf, die Zellspannung steigt um bis zu 200 mV an. Treibt man die Gasblasen durch Erschütterungen der Elektrolysezelle aus, so fällt die Zellspannung auf den Anfangswert.

TABELLE 1:
Elektrodenpotentiale gegen GKE in 33 %iger Natronlauge
bei 80°C (Reaktionsgas: Sauerstoff)

| Beschichtungsmaterial | Potentiale gegen GKE bei Belastung mit Stromdichten von 1 kA/m² | 2 kA/m² | 3 kA/m² | 4 kA/m² |
|---|---|---|---|---|
| Zinkoxid | 200 mV | 270 mV | 340 mV | 400 mV |
| Mangandioxid | 180 | 240 | 300 | 370 |
| Silberoxid | 180 | 230 | 280 | 320 |
| Eisenpulver | 230 | 320 | 400 | 470 |
| Nickelpulver | 190 | 250 | 310 | 380 |
| Silberpulver | 190 | 240 | 300 | 350 |
| Ni/Al-Legierung | 190 | 240 | 275 | 300 |
| Vergleichselektrode ohne Besch. | 220 | 300 | 360 | 420 |

**Patentansprüche**

1. Gasdiffusionselektrode für die Sauerstoffreduktion enthaltend eine hydrophobe Elektrokatalysatorschicht in Form eines Gemisches aus metallischem Silber und hydrophobem Polymer und eine mit dieser verbundenen hydrophilen Schicht bestehend aus mindestens einem Übergangsmetall oder einem Oxyd oder Mischoxyd von Übergangsmetallen, welche in feinverteilter Form auf die hydrophobe Schicht aufgebracht wurden, dadurch gekennzeichnet, daß in der hydrophoben Elektrokatalysatorschicht ein Netz aus Metalldraht als Stromkollektor angeordnet ist.

2. Gasdiffusionselektrode gemäß Anspruch 1, dadurch gekennzeichnet, daß der netzförmige Stromkollektor auf einer Seite der hydrophoben Elektrokatalysatorschicht und die hydrophile Deckschicht auf der anderen Seite angeordnet ist.

3. Gasdiffusionselektrode gemäß Anspruch 1, dadurch gekennzeichnet, daß die Übergangsmetalle ausgewählt sind aus der Gruppe bestehend aus Titan, Chrom, Mangan, Eisen, Kobalt, Nickel, Kupfer, Zink, Silber, Ruthenium, Rhodium, Palladium, Osmium, Iridium und Platin.

4. Gasdiffusionselektrode gemäß Anspruch 3, dadurch gekennzeichnet, daß ein Oxid aus der Gruppe Titanoxid, Mangan-IV-Oxid, Zinkoxid und Silberoxid verwendet wird.

5. Verfahren zur Herstellung einer Gasdiffusionselektrode gemäß Anspruch 1, bei dem man zunächst aus einem pulverförmigen Gemisch, das Elektrokatalysator und ein hydrophobes Polymer enthält, eine hydrophobe Elektrokatalysatorschicht erzeugt, als Elektrokatalysator metallisches Silber einsetzt, dadurch gekennzeichnet, daß man die Elektrokatalysatorschicht mit einem netzförmigen Stromkollektor verbindet und auf der Elektrolytseite der Elektrokatalysatorschicht in feinverteilter Form mindestens ein Übergangsmetall oder ein Oxid oder Mischoxid von Übergangsmetall oder ein Oxid oder Mischoxid von Übergangsmetallen aufbringt und durch Anwendung von Druck mit der hydrophoben Elektrokatalysatorschicht verbindet.

6. Verfahren nach Anspruch 5, dadurch gekennzeichnet, daß das Übergangsmetall Nickel ist, man eine Nickel-Aluminium-Legierung mit der hydrophobierten Elektrokatalysatorschicht verbindet und man durch Behandlung mit Lauge den Aluminium-Anteil der Nickel-Aluminium-Legierung herauslöst.

**Revendications**

1. Electrode à diffusion gazeuse pour la réduction de l'oxygène, contenant une couche d'électrocatalyseur hydrophobe sous forme d'un mélange d'argent métallique et d'un polymère hydrophobe, et une couche hydrophile, liée à cette dernière, constituée d'au moins un métal de transition ou d'un oxyde ou d'un oxyde mixte de métaux de transition, qui ont été appliqués sous une forme finement divisée sur la couche hydrophobe, caractérisée en ce que, dans la couche d'électrocatalyseur hydrophobe, est disposé un réseau en fil métallique servant de collecteur de courant.

2. Electrode à diffusion gazeuse selon la revendication 1, caractérisée en ce que le collecteur de courant réticulaire est disposé sur une face de la couche d'électrocatalyseur hydrophobe, et la couche de couverture hydrophile sur l'autre face.

3. Electrode à diffusion gazeuse selon la revendication 1, caractérisée en ce que les métaux de

transition sont choisis dans le groupe comprenant le titane, le chrome, le manganèse, le fer, le cobalt, le nickel, le cuivre, le zinc, l'argent, le ruthénium, le rhodium, le palladium, l'osmium, l'iridium et le platine.

4. Electrode à diffusion gazeuse selon la revendication 3, caractérisée en ce qu'on utilise un oxyde du groupe oxyde de titane, oxyde de manganèse(IV), oxyde de zinc et oxyde d'argent.

5. Procédé pour la fabrication d'une électrode à diffusion gazeuse selon la revendication 1, dans lequel on produit d'abord à partir d'un mélange pulvérulent contenant un électrocatalyseur et un polymère hydrophobe une couche d'électrocatalyseur hydrophobe, et on utilise en tant qu'électrocatalyseur de l'argent métallique, caractérisé en ce qu'on relie la couche d'électrocatalyseur à un collecteur de courant réticulaire, et on applique sur le côté électrolyte de la couche d'électrocatalyseur, sous forme finement divisée, au moins un métal de transition ou un oxyde ou un oxyde mixte d'un métal de transition ou un oxyde ou un oxyde mixte de métaux de transition, et, grâce à l'utilisation de la pression, on la lie à la couche d'électrocatalyseur hydrophobe.

6. Procédé selon la revendication 5, caractérisé en ce que le métal de transition est le nickel, qu'on lie un alliage nickel-aluminium à la couche d'électrocatalyseur hydrophobe, et que, par traitement avec une lessive, on extrait par dissolution la partie aluminium de l'alliage nickel-aluminium.

**Claims**

1. A gas diffusion electrode for the reduction of oxygen, containing a hydrophobic electro-catalyst layer in the form of a mixture of metallic silver and a hydrophobic polymer and a hydrophilic layer, bonded to the latter, comprising at least one transition metal or an oxide or mixed oxide of transition metals which have been applied in a finely divided form to the hydrophobic layer, wherein a mesh of metal wire is arranged as the current collector in the hydrophobic electro-catalyst layer.

2. The gas diffusion electrode as claimed in claim 1, wherein the current collector in the form of a mesh is located on one side of the hydrophobic electro-catalyst layer and the hydrophilic covering layer is located on the other side.

3. The gas diffusion electrode as claimed in claim 1, wherein the transition metals are selected from the group comprising titanium, chromium, manganese, iron, cobalt, nickel, copper, zinc, silver, ruthenium, rhodium, palladium, osmium, iridium and platinum.

4. The gas diffusion electrode as claimed in claim 3, wherein an oxide from the group comprising titanium oxide, manganese-IV oxide, zinc oxide and silver oxide is used.

5. A process for producing a gas diffusion electrode as claimed in claim 1, in which a hydrophobic electro-catalyst layer is first prepared from a pulverulent mixture which contains the electro-catalyst and a hydrophobic polymer, and metallic silver is used as the electro-catalyst, which comprises bonding the electro-catalyst layer to a current collector in the form of a mesh and applying at least one transition metal or an oxide or mixed oxide of a transition metal or an oxide or mixed oxide of transition metals in a finely divided form to the electrolyte side of the electro-catalyst layer and bonding it to the hydrophobic electro-catalyst layer by the application of pressure.

6. The process as claimed in claim 5, wherein the transition metal is nickel, a nickel-aluminium alloy is bonded to the electro-catalyst layer which has been rendered hydrophobic, and the aluminium fraction of the nickel-aluminium alloy is dissolved out by treatment with caustic solution.

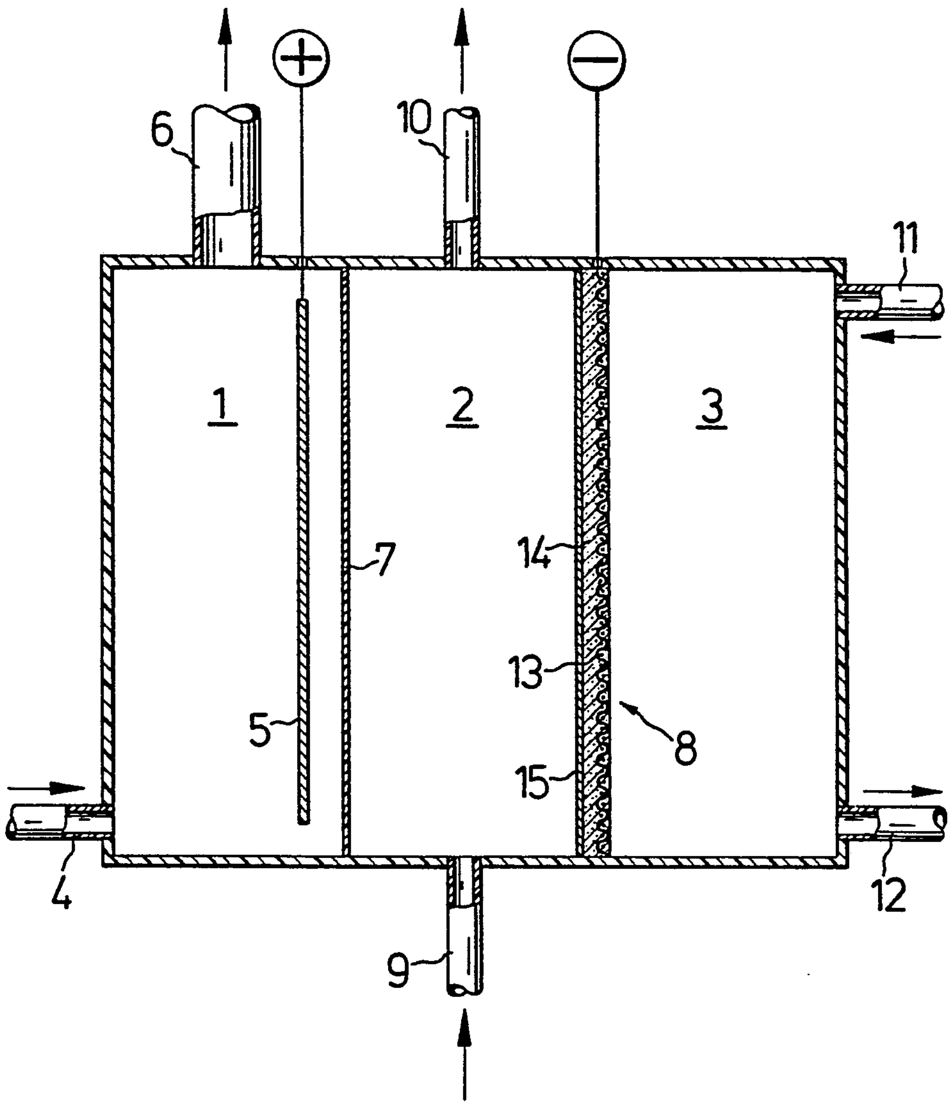
+
−
6
10
11
1
2
3
14
7
13
5
8
15
4
12
9